# EUROPÄISCHE PATENTSCHRIFT

(11) **EP 1 512 564 B1**
(45) Veröffentlichungstag und Bekanntmachung des Hinweises auf die Patenterteilung: **27.01.2010**
(21) Anmeldenummer: 03292200.7
(22) Anmeldetag: 05.09.2003
(51) Int. Cl.: B60H 1/32

(54) **Klimaanlage, insbesondere für ein Kraftfahrzeug**
Air conditioning system for a motor vehicle
Dispositif de climatisation pour véhicule automobile

(43) Veröffentlichungstag der Anmeldung: 09.03.2005
(73) Patentinhaber: Behr France Rouffach SAS, 68250 Rouffach (FR)
(72) Erfinder: Monnier, Yves, 68300 Saint Louis (FR); Bohn, Serge, 68230 Turkheim (FR)
(74) Vertreter: Grauel, Andreas

(56) Entgegenhaltungen:
- EP-A1- 0 818 334
- DE-A- 3 623 185
- FR-A- 2 539 848
- US-A- 5 873 779
- PATENT ABSTRACTS OF JAPAN vol. 2000, no. 02, 29. Februar 2000 (2000-02-29) -& JP 11 301252 A (DENSO CORP), 2. November 1999 (1999-11-02)
- PATENT ABSTRACTS OF JAPAN vol. 1997, no. 08, 29. August 1997 (1997-08-29) -& JP 09 095125 A (CALSONIC CORP;NISSAN MOTOR CO LTD), 8. April 1997 (1997-04-08)

## Beschreibung

Die Erfindung betrifft eine Klimaanlage, insbesondere für ein Kraftfahrzeug, gemäß dem Oberbegriff des Anspruchs 1.

Bei Klimaanlagen tritt häufig das Problem auf, dass sich nach dem Verdampfer auftretendes Kondenswasser ansammelt und zu Spritzwasser führt, so dass es bis zu dem nach dem Verdampfer angeordneten Heizkörper gelangt, wobei diese Zone der Klimaanlage in der Regel nicht für Wasser ausgelegt ist.

Das Dokument US-A-5873779 offenbart ein Gehäuse einer Heizungs- oder Klimaanlage eines Fahrzeugs, welches im Wesentlichen in vier Teile geteilt ist, nämlich in ein Grundgehäuse, einem Zwischengehäuse, einem unterem Deckel und einem Enddeckel. In einem Ausführungsbeispiel ist in dem unteren Deckel ein Hohlraum am Endbereich des Deckels vorgesehen, welcher einen Raum bildet um Kondensat zu sammeln, so dass dieser Hohlraum als Kondensatsumpf (Condensate sump) fungiert.

Dokument JP 11301252 A offenbart eine Kühleinheit (cooling unit) für eine Fahrzeugklimaanlage. Luft, welche in einem Gehäuse einen Verdampfer durchströmt, wird umgeleitet, wobei in einem Luftkanal eine Rippe abstehend von der Gehäusewandung vorgesehen ist. Mittels dieser Rippe wird in dem Luftstrom mitgeführtes Kondenswasser am Weiterströmen behindert.

Dokument JP 09095125 A zeigt eine Kondenswasserabgabestruktur für eine Fahrzeugklimaanlage. Luft wird hierzu über einen Verdampfer geführt und anschließend in einem Gehäuse umgelenkt, wobei dieser Luftstrom auf eine Prallwand (deflection wall surface) trifft. Ein stromabwertiges Ende der Prallwand ist mit einer nahezu vertikalen Wandfläche verbunden, um den Luftstrom aufwärts zu leiten. Mittels der gezeigten Anordnung soll verhindert werden, dass das Kondenswasser aufwärts mit dem Luftstrom in das Gehäuse mitströmt.

Es ist Aufgabe der Erfindung, eine verbesserte Klimaanlage zur Verfügung zu stellen.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage mit einem in einem Luftführungsgehäuse angeordneten Verdampfer und einem Heizkörper vorgesehen, bei der im Luftführungsgehäuse nach dem Verdampfer mindestens eine Rinne zur Ableitung von Kondenswasser vorgesehen ist, wobei die Rinne im Prinzip eine beliebige Gestalt aufweisen kann.

Bevorzugt ist die Rinne an einer kleinen, vorstehenden Wand zwischen dem Verdampfer und dem Heizkörper auf der Seite des Verdampfers angeordnet, welche unter anderem dazu dient, das sich im Verdampfer sammelnde Kondenswasser vom Heizkörper abzuhalten. Dabei ist die Wand einstückig mit dem Luftführungsgehäuse der Klimaanlage ausgebildet.

Vorzugsweise verläuft die Rinne im Wesentlichen parallel zum Verdampfer, wobei jedoch bevorzugt ein kleines Gefälle vorgesehen sein kann, damit das sich in der Rinne sammelnde Kondenswasser seitlich abgeführt werden kann.

Die Rinne ist vorzugsweise im Wesentlichen trapezförmig oder rechteckig ausgebildet, wobei im Bereich der Ecken Abrundungen vorgesehen sein können, welche Kerbwirkungen verringern und die Herstellung vereinfachen.

Vorzugsweise ist die Rinne aus Gründen der Schwerkraft im in einem Kraftfahrzeug eingebauten Luftführungsgehäuse unten angeordnet.

Die Rinne ist bevorzugt in das Luftführungsgehäuse direkt integriert, das heißt sie ist einstückig mit dem Luftführungsgehäuse ausgebildet. Somit kann die Rinne gleich bei der Herstellung des Luftführungsgehäuses, das heißt insbesondere beim Spritzgießen desselben, ausgebildet werden, so dass kein zusätzlicher Arbeitsaufwand und keine zusätzlichen Teile erforderlich sind.

Im Folgenden wird die Erfindung anhand eines Ausführungsbeispiels unter Bezugnahme auf die Zeichnung im Einzelnen erläutert. In der Zeichnung zeigen:

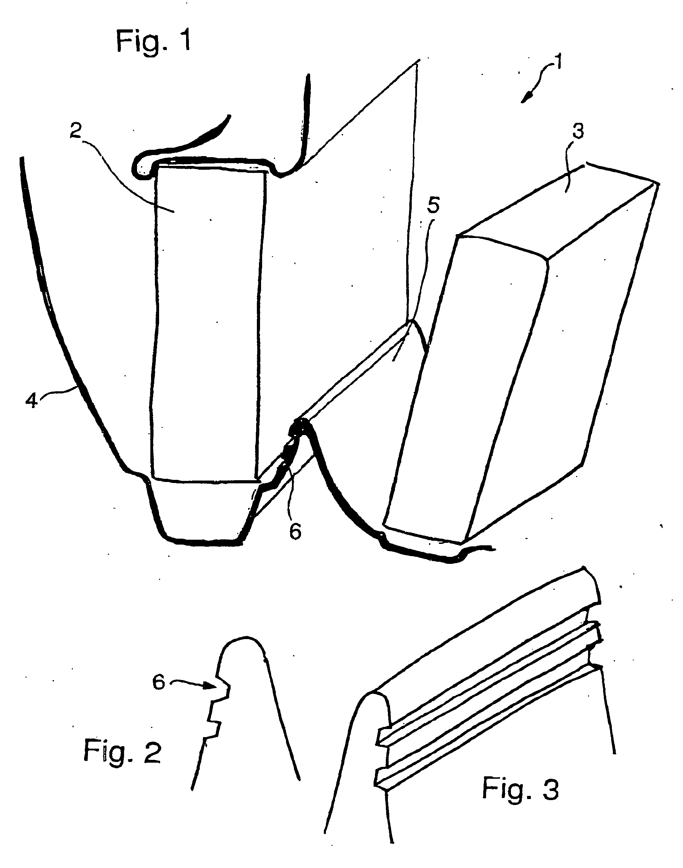

- Fig. 1: einen Schnitt durch einen Teil einer schematisch dargestellten Klimaanlage,
- Fig. 2: eine perspektivische Detailansicht von Fig. 1, und
- Fig. 3: eine Darstellung der Ansicht von Fig. 2 aus einer anderen Perspektive.

Eine Klimaanlage 1 eines Kraftfahrzeugs mit einem Verdampfer 2 und einem Heizkörper 3, welche in einem Luftführungsgehäuse 4 aus Kunststoff angeordnet sind, weist eine zwischen dem Verdampfer 2 und dem Heizkörper 3 angeordnete kleine Wand 5 auf. Diese Wand 5 dient dazu, Kondenswasser, das sich im Verdampfer 2 ansammelt, daran zu hindern, zum Heizkörper 3 zu gelangen. Die Wand 5 ist im eingebauten Zustand der Klimaanlage 1 unten angeordnet und verläuft etwa parallel zum Verdampfer 2, wobei sie an ihrem oberen Ende etwas weiter vom Verdampfer 2 beabstandet ist als an ihrem unteren Ende.

In der Wand 5 sind zwei trapezförmige Rinnen 6 angeordnet, die parallel zueinander über die gesamte Länge der Wand 5 verlaufen. Hierbei ist ein leichtes Gefälle vorgesehen, so dass Spritzwasser vom Verdampfer 2, das zur Wand 5 gelangt, in den Rinnen 6 gesammelt und über eine Ableitung von der Rinne 6 nach außerhalb des Luftführungsgehäuses 4 abgeleitet werden kann. Die Rinnen 6 sind direkt in die Wand 5 und somit in das Luftführungsgehäuse 4 integriert, so dass keine zusätzlichen Teile erforderlich sind.

### Bezugszeichenliste

- 1: Klimaanlage
- 2: Verdampfer
- 3: Heizkörper
- 4: Luftführungsgehäuse
- 5: Wand
- 6: Rinne

## Patentansprüche

1. Klimaanlage mit einem in einem Luftführungsgehäuse (4) angeordneten Verdampfer (2) und einem Heizkörper (3), wobei im Luftführungsgehäuse (4) nach dem Verdampfer (2) mindestens eine Rinne (6) vorgesehen ist,
wobei die Rinne (6) an einer vorstehenden Wand (5) zwischen dem Verdampfer (2) und dem Heizkörper (3) auf der Seite des Verdampfers (2) angeordnet ist, **dadurch gekennzeichnet, dass** die Rinne (6) im Wesentlichen parallel zum Verdampfer (2) verläuft, und im eingebauten Zustand ein leichtes Gefälle aufweist zur Ableitung von Kondenswasser.

2. Klimaanlage nach einem der vorhergehenden Ansprüche, **dadurch gekennzeichnet, dass** die Rinne (6) im Wesentlichen trapezförmig oder rechteckig ausgebildet ist.

3. Klimaanlage nach einem der vorhergehenden Ansprüche, **dadurch gekennzeichnet, dass** die Rinne (6) im in einem Kraftfahrzeug eingebauten Luftführungsgehäuse (2) unten angeordnet ist.

4. Klimaanlage nach einem der vorhergehenden Ansprüche, **dadurch gekennzeichnet, dass** die Rinne (6) in das Luftführungsgehäuse (2) direkt integriert ist.

5. Klimaanlage nach einem der vorhergehenden Ansprüche, **dadurch gekennzeichnet, dass** das Luftführungsgehäuse (2) aus Kunststoff gefertigt ist.

6. Klimaanlage nach einem der vorhergehenden Ansprüche, **dadurch gekennzeichnet, dass** im Luftführungsgehäuse (2) eine Ableitung von der Rinne (6) nach außen vorgesehen ist.

## Claims

1. Air-conditioning system with an evaporator (2) arranged in an air duct housing (4) and a heater (3), such that at least one channel (6) is provided in the air duct housing (4) after the evaporator, the said channel (6) being formed on a projecting wall (5) between the evaporator (2) and the heater (3) on the side of the evaporator (2), **characterised in that** the channel (6) runs essentially parallel to the evaporator (2) and, in the fitted condition, has a slight downwards inclination so as to drain off condensation water.

2. Air-conditioning system according to Claim 1, **characterised in that** the channel (6) is essentially of trapezium or rectangular shape.

3. Air-conditioning system according to any of the preceding claims, **characterised in that** the channel (6) is arranged at the bottom of an air duct housing (2) fitted in a motor vehicle.

4. Air-conditioning system according to any of the preceding claims, **characterised in that** the channel (6) is directly integrated in the air duct housing (2).

5. Air-conditioning system according to any of the preceding claims, **characterised in that** the air duct housing (2) is made of plastic.

6. Air-conditioning system according to any of the preceding claims, **characterised in that** in the air duct housing (2) a drain is provided from the channel (6) towards the outside.

## Revendications

1. Installation de climatisation comportant un évaporateur (2) monté dans un carter de guidage d'air (4), et un corps de chauffe (3), au moins une goulotte (6) étant prévue dans le carter de guidage d'air (4) en aval de l'évaporateur (2), la goulotte (6) étant agencée sur une paroi (5) en saillie entre l'évaporateur (2) et le corps de chauffe (3) sur le côté de l'évaporateur (2), **caractérisée en ce que** la goulotte (6) s'étend sensiblement parallèlement à l'évaporateur (2), et présente dans un état monté une légère pente descendante pour l'évacuation de l'eau de condensation.

2. Installation de climatisation selon la revendication précédente, **caractérisée en ce que** la goulotte (6) est réalisée avec une forme sensiblement trapézoïdale ou rectangulaire.

3. Installation de climatisation selon l'une quelconque des revendications précédentes, **caractérisée en ce que** la goulotte (6) est agencée en bas dans un carter de guidage d'air (4) monté dans un véhicule automobile.

4. Installation de climatisation selon l'une quelconque des revendications précédentes, **caractérisée en ce que** la goulotte (6) est intégrée directement dans le carter de guidage d'air (4).

5. Installation de climatisation selon l'une quelconque des revendications précédentes, **caractérisée en ce que** le carter de guidage d'air (4) est réalisé en matière plastique.

6. Installation de climatisation selon l'une quelconque des revendications précédentes, **caractérisée en ce qu'**il est prévu dans le carter de guidage d'air (4) une dérivation de la goulotte (6) vers l'extérieur.
